# EUROPÄISCHE PATENTANMELDUNG

(11) **EP 1 597 962 A1**
(43) Veröffentlichungstag der Anmeldung: **23.11.2005**
(21) Anmeldenummer: 05009920.9
(22) Anmeldetag: 06.05.2005
(51) Int. Cl.: A01F 15/07

(54) **Maschine zum Aufnehmen und Pressen von landwirtschaftlichem Erntegut**

(30) Priorität: 11.05.2004 DE 102004023694
(71) Anmelder: Maschinenfabrik Bernard Krone GmbH, 48480 Spelle (DE)
(72) Erfinder: Krone, Bernard, Dr.Ing. E.h., 48480 Spelle (DE); Martensen, Klaus, Dr.- Ing., 48477 Hörstel (DE)

(57) **Zusammenfassung**

Maschine (1) zum Aufnehmen und Pressen von landwirtschaftlichem Erntegut wie beispielsweise Heu, Stroh, Gras oder dergleichen zu rollenförmigen Ballen mit einer mittels eines Fahrgestells aufklappbaren Wickelkammer (3), welche eine einer Erntegutaufnahmevorrichtung (6) nachgeordnete Ballenformeinrichtung (2) aufweist, welche über zumindest eine erste und eine zweite ortsfeste Umlenkeinrichtung (7,16) geführt ist und die während einer Ballenformphase innerhalb der Wickelkammer (3) eine räumlich bestimmte Bewegungsbahn auf Führungen (12) durchläuft und die zur Verdichtung des zu formenden Ballens nach Erreichen eines Ballendurchmessers auf den Ballen eine Verdichtungskraft von außen nach innen ausübt, wobei die Ballenformeinrichtung (2) während ihrer räumlich bestimmten Bewegungsbahn während einer ersten Ballenformphase auf zwischen der ersten und der zweiten Umlenkeinrichtung (7,16) gelegenen ortsfesten Führungen (12) abgestützt ist, von denen die Ballenformeinrichtung (2) während einer anschließenden Ballenformphase abhebbar ist.

## Beschreibung

Die Erfindung bezieht sich auf eine Maschine zum Aufnehmen und Pressen von landwirtschaftlichem Erntegut wie beispielsweise Gras, Heu, Stroh oder dergleichen zu rollenförmigen Ballen mit einer mittels eines Fahrgestells verfahrbaren aufklappbaren Wickelkammer in einer Ausbildung gemäß dem Oberbegriff des Patentanspruches 1.

Maschinen zum Aufnehmen und Pressen von landwirtschaftlichem Erntegut der vorgenannten Art sind in einer üblichen Bauform als Rundballenpressen mit Festkammerausbildung gestaltet und haben eine Ballenformeinrichtung, die während der gesamten Ballenformphase eine räumlich bestimmte Bewegungsbahn durchläuft und dazu in gehäuseseitigen Führungen geführt ist. Mit solchen Maschinen lassen sich Ballen eines bestimmten Ballendurchmessers formen, indem über eine Erntegutaufnahmevorrichtung dem Ballenformraum Erntegut zugeführt wird und nach Befüllung des vorgesehenen Ballenformraumes die Ballenformeinrichtung auf den zu formenden Ballen eine Verdichtungskraft von außen nach innen ausübt, so dass sich diese Verdichtungsphase an die vorangegangene Erntegutzuführungsphase bzw. die Ballenformphase anschließt. Mit solchen Maschinen lassen sich Ballen formen, die aufgrund der zum Ende der Ballenformung hin vorgesehenen Ballenverdichtungsphase einen relativ festen äußeren Durchmesserbereich bei gleichzeitigem relativ weichem Balleninneren aufweisen. Dies kann Vorteile bei einer nachfolgenden Verarbeitung des Ballens mit sich bringen, indem das relativ weiche Balleninnere mit einfachen Mitteln und auch ohne größeren Kraftaufwand zerteilt werden kann.

Darüber hinaus ist es z.B. aus der EP 0 121 279 A2 bekannt, Maschinen zum Aufnehmen und Pressen von landwirtschaftlichem Erntegut als Pressen mit einer variablen Größe des Wickelraumes zu gestalten, mit denen ausgehend von einer Ballenformstartphase durch eine räumlich variabel bewegte Ballenformeinrichtung der zu formende Ballen ständig an der Ballenformeinrichtung geführt wird, diese mithin auch während der gesamten Befüllung des variablen Wickelraumes auf den Ballen eine Kraft ausübt und eine abschließende Verdichtungsphase dadurch entfällt. Da die Verdichtung des Ballens kontinuierlich durchgeführt wird, sind Ballen mit einem gewünschten Durchmesserendbereich des Ballens fertig aus dem Ballenformraum auszubringen, so dass Ballen mit unterschiedlichen Durchmessern und mithin in unterschiedlicher Größe zur Verfügung zu stellen sind. Ein solcher in einer variablen Maschine gefertigter Ballen unterscheidet sich jedoch hinsichtlich seines Aufbaus, beispielsweise hinsichtlich seiner Festigkeit des Balleninneren von einem Ballen, der in einer Maschine gefertigt wird, die nach dem Festkammerprinzip arbeitet. So ist ein solcher in einer variablen Maschine hergestellter Ballen gegenüber einem in einer Festkammermaschine hergestellten Ballen hinsichtlich seiner Auflöseeigenschaften unterschiedlich. Nachteilig bei Maschinen, die nach dem variablen Ballenformprinzip arbeiten, ist zudem der hohe technische Aufwand in Gestalt von vorzusehenden konstruktiven Mitteln, die die Variabilität der Ballengröße und die permanente Krafteinwirkung ermöglichen. Zudem sind mit solchen Maschinen keine Ballen zu formen, die ein relativ weiches Balleninnere aufweisen.

Es ist Aufgabe der vorliegenden Erfindung, eine Maschine der eingangs genannten Art zur Verfügung zu stellen, die in baulich einfacher Weise mit einer einfach gestalteten Ballenformeinrichtung auskommt, die jedoch darüber hinaus in der Lage ist, Ballen unterschiedlicher Größe zu formen.

Zur Lösung dieser Aufgabe zeichnet sich die Maschine zum Aufnehmen und Pressen von landwirtschaftlichem Erntegut der eingangs genannten Art dadurch aus, dass die Ballenformeinrichtung während ihrer räumlich bestimmten Bewegungsbahn während einer ersten Ballenformphase auf zwischen der ersten und der zweiten Umlenkeinrichtung gelegenen ortsfesten Führung abgestützt ist, von denen die Ballenformeinrichtung während einer anschließenden Ballenformphase abhebbar ist.

Damit ist eine Maschine zum Aufnehmen und Pressen von landwirtschaftlichem Erntegut geschaffen, bei der während einer ersten Ballenformphase zunächst das aufgenommene Erntegut in die Wickelkammer einfüllbar ist, während die Ballenformeinrichtung noch eine räumlich bestimmte Bewegungsbahn durchläuft und mithin noch keine Verdichtungsdruckkraft auf das eingefüllte Erntegut ausübt. Gleichwohl sind maschinenseitig die konstruktiven Voraussetzungen geschaffen, dass mit zunehmender Menge des eingefüllten Erntegutes die Ballenformeinrichtung sich von den ortsfesten Führungen abheben lässt und in Bewegungsbahnen überführbar ist, die die Formung eines gegenüber der räumlich bestimmten Bewegungsbahn größeren Ballens ermöglicht. Dies kann einstellbar erfolgen, jedoch auch z.B. durch den zu formenden Ballen selbst, indem dieser die Ballenformeinrichtung kontaktiert und mit Zunahme des Ballendurchmessers die Ballenformeinrichtung von den Führungen der räumlich bestimmten Bewegungsbahn abhebt. Dies alles ist mit baulich und konstruktiv einfachen Mitteln zu vollziehen. Während der Anhebephase muss eine seitliche Gehäusewandführung den Ballen nicht mehr zusätzlich begrenzen. Vielmehr ist es auch möglich, durch einen gehäuseseitig sich zur Maschinenaußenseite erweiternden Absatz die baulichen Voraussetzungen zu schaffen, den Raum oberhalb des Absatzes zur Verfügung zu stellen, in den die Ballenformeinrichtung nach dem Abheben von den Führungen der ortsfesten bzw. räumlich bestimmten Bewegungsbahn abhebt und in diesen Freiraum oberhalb des Absatzes eintaucht. Dann ist in diesem Bereich ein seitlicher Abstand zu einer sich an den Absatz anschließenden oberen Gehäuseseitenwandung vorgesehen. Die Ballenformeinrichtung läuft bevorzugtermassen über Umlenkrollen, die im Absatzbereich der Gehäusewandung ortsfest montiert sind.

Mit einer solchen Maschine sind zudem die Voraussetzungen geschaffen, dass die Maschine als eine solche arbeitet, bei der zunächst der Ballen wie bei einer bekannten Festkammermaschine behandelt wird, indem über eine Erntegutaufnahmevorrichtung das Erntegut in den Ballenformraum relativ lose eingebracht wird, ohne dass auf das Erntegut bereits eine für eine Verdichtungsphase wesentliche Kraft durch die Ballenformeinrichtung ausgeübt wird. Während dieser Phase durchläuft die Ballenformeinrichtung in völlig analoger Weise wie bei einer Festkammermaschine eine räumlich bestimmte Bewegungsbahn, die konstruktiv durch die Maschine vorgegeben ist. Dabei tritt ein Polygoneffekt bezüglich der Vorverdichtung des Erntegutes auf, indem während dieser ersten Ballenformphase das Erntegut pulsierend vorverdichtet werden kann. Dies kann durch eine mehreckig gestaltete Ballenstartkammer begünstigt werden. Erst nach Erreichen einer Ballengröße, bei der der Ballen mit der Ballenformeinrichtung in Kontakt gerät, kann sich eine weitere Ballenformphase anschließen, bei der der zu formende Ballen ständig an der Ballenformeinrichtung anliegt, die während dieser sich an die erste Ballenformphase anschließenden Ballenformphase sich ändernde, durch die wachsende Größe des Ballens bestimmte Bewegungsbahnen durchläuft, und zwar bis hin zu einem von der Bedienperson vorgewählten, durch Stellmittel bestimmten Bereich, der damit auch den Ballendurchmesser des zu formenden Ballens wählbar bestimmt. Ist dieser Ballendurchmesserbereich erreicht, schließt sich wiederum wie bei bekannten Festkammermaschinen die Verdichtung des äußeren Ballendurchmesserbereiches an, indem nämlich die Ballenverdichtungsphase eingeleitet wird und mithin ein Ballen zu formen ist, der bei vorgebbarer Ballendurchmessergröße einen relativ weichen Ballenkern und eine relativ stark verdichtete Außenhaut aufweist. Dies alles ist mit baulich relativ einfachen Mitteln zu vollziehen, womit eine Maschine zur Verfügung gestellt ist, die von ihrem gattungsgemäßen Funktionsprinzip eine Festkammermaschine darstellt, jedoch nicht auf eine Ballengröße beschränkt ist. So können mit einer derartigen Maschine beispielsweise Ballen geformt werden mit Größen von beispielsweise 100 bis 150 cm Durchmesser, wobei der kleinere Durchmesserbereich auch beispielsweise dadurch zu erreichen ist, dass sich die weitere Ballenformphase mit den weiteren Bewegungsbahnen der Ballenformeinrichtung gar nicht mehr einstellt, sondern die Stellmittel aufgrund ihrer gewählten Stellung dafür sorgen, dass sich unmittelbar nach Beendigung der ersten Ballenformphase bereits die Verdichtungsphase anschließt. Der Benutzer einer Maschine kann daher die erfindungsgemäße Maschine auch als reine Festkammermaschine nutzen und mithin Ballen herkömmlicher Machart herstellen. Darüber hinaus kann er jedoch mit einfachen und bedienerfreundlichen Mitteln auch im Bedarfsfall größere Ballen formen, wobei sich bei diesem gewählten Ballenformvorgang die weitere Ballenformphase an die erste Ballenformphase vor der Verdichtungsphase anschließt.

Bevorzugterweise sind die Stellmittel als Anschläge, Begrenzungselemente und dgl. vorgesehen, wobei ein Begrenzungselement bzw. ein Widerlager gehäusefest abgestützt sein kann und ein anderes Anschlagelement z.B. verstellbar ausgebildet ist, um den wählbaren Durchmesserbereich realisieren zu können. Alternativ bieten sich selbstverständlich auch pneumatische oder hydraulische Stellmittel mit entsprechenden blockierten Stellungslagen an, um die entsprechenden Anschläge bzw. Widerlager mit einfach anfahrbarer Endstellung auszubilden. In einer besonders bevorzugten Ausbildung der Maschine nach der Erfindung können mehrere ortsfeste Umlenkeinrichtungen vorgesehen sein. Bevorzugt sind zwischen einer ersten einer zweiten Umlenkeinrichtung in dem Gehäuse der Maschine in einem zweckmäßigerweise vertikal gestalteten Gehäuseseitenbereich weitere ortsfeste Seitenwandführungen vorgesehen. Dies kann dadurch geschehen, dass diese Seitenwandgehäuseteile den Ballenformraum zunächst begrenzen und ab einer bestimmten Höhe erweitert ausgebildet sind und mithin einen Absatz aufweisen, der sich zu den Außenseiten der Maschine hin erweitert. In diesem Bereich können weitere Führungsrollen ortsfest abgestützt werden, auf denen zur Festlegung der bestimmten Bewegungsbahn innerhalb der Maschine die Ballenformeinrichtung abläuft. Durch die Erweiterung ist oberhalb dieser Führungen ein Ausweichraum für die Ballenformeinrichtung vorgesehen, so dass diese nach dorthin ausweichen kann, wenn die weiteren Bewegungsbahnen der Formeinrichtung eingenommen werden sollen nach Erreichen bzw. Beendigung der ersten Ballenformphase. Durch die vorgesehenen Umlenkrollen und durch vorzugsweise vorgesehenen Riemen, die Bestandteile der Ballenformeinrichtung sind, sind die Laufgeräusche der Formeinrichtung außerordentlich gegenüber herkömmlichen Maschinen reduziert.

Weitere Vorteile und Ausgestaltungen der Erfindung ergeben sich aus weiteren Unteransprüchen, der nachfolgenden Beschreibung und der Zeichnung. In der Zeichnung zeigen:

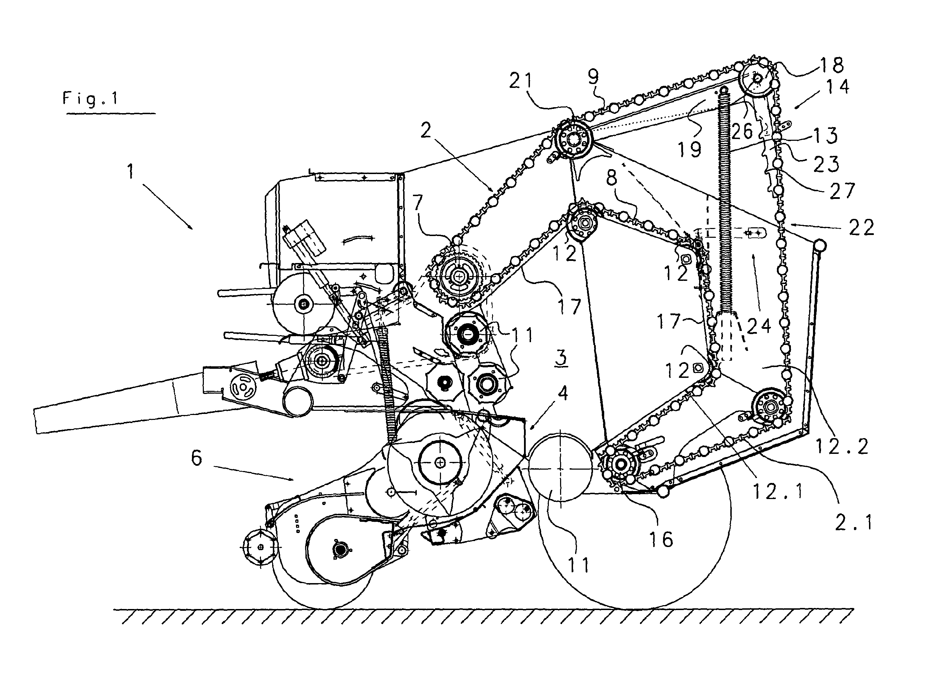

- Figur 1:: Eine schematische geschnittene Seitenansicht einer Maschine mit Darstellung einer Lage der Ballenformeinrichtung während der ersten Ballenformphase;
- Figur 2:: eine zu Figur 1 analoge Darstellung mit Darstellung der Ballenformeinrichtung, die sich in ihrer Endlage in der Verdichtungsphase befindet;
- Figur 3:: eine schematische perspektivische Darstellung der Ballenformeinrichtung, die in dem gezeigten Ausführungsbeispiel Umlenkrollen und an einem Absatz an den Seitenwandungsteilen der Maschine geführt ist und seitliche Riemen sowie Stäbe aufweist;
- Figur 4:: eine Schnittdarstellung im Riemen- und Stabbereich in der Ballenformeinrichtung sowie durch eine ortsfeste Umlenkrolle in dem in Figur 3 gezeigten Gehäuseabsatz;
- Figuren 5 und 6:: schematische Schnittdarstellungen der Lagen der Ballenformein-richtung in den Stellungen, die in Figuren 1 und 2 darstellt sind,
- Figur 7:: schematisch eine zusätzliche Hydraulikpumpe zum Öffnen der Wickelkammer der Maschine.

Die Zeichnungen zeigen in einigen Darstellungen jeweils eine Seite einer Maschine mit den dort vorgesehenen Teilen. Es versteht sich, dass dies auch an der anderen Maschinenseite, die nicht dargestellt ist, vorhanden sind oder vorhanden sein können.

Die Maschine 1 ist in dem gezeigten Ausführungsbeispiel als Rundballenpresse ausgebildet und hat eine Ballenformeinrichtung 2, die eine Wickelkammer 3 ausbildet. Diese Wickelkammer 3 hat eine Einlassöffnung 4, durch die von einer Erntegutaufnahmevorrichtung 6 aufgenommenes Erntegut wie beispielsweise Heu oder Anwelkgut in die Wickelkammer 3 eingebracht wird. Die Antriebsrollen 7 unterteilen die Ballenformeinrichtung 2 in ein Lasttrum 8 und Leertrum 9.
Ober- und unterhalb der Öffnung 4 angeordnete Walzen 11 begrenzen die Wickelkammer 3.

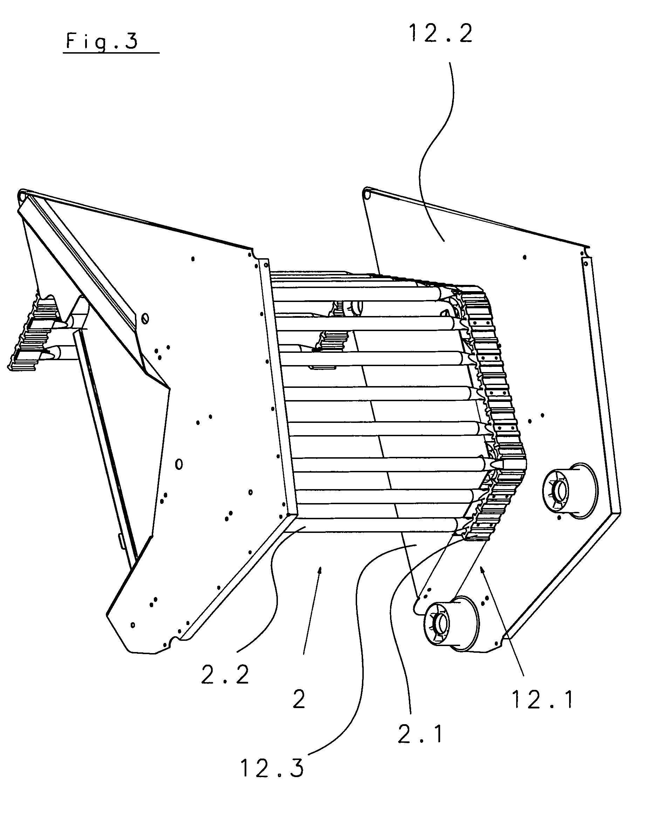

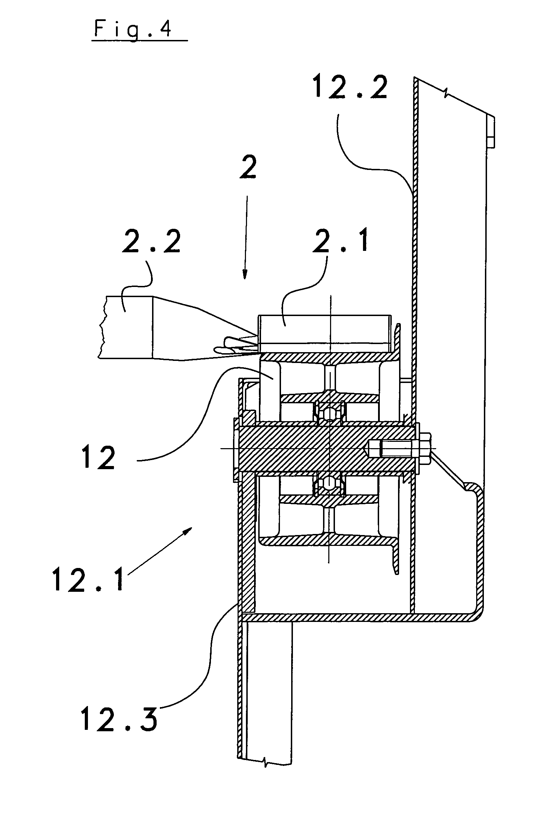

Zusätzlich ist eine erste ortsfeste Umlenkeinrichtung in Gestalt der Umlenkrollen 16 sowie der Umlenkrollen 7 vorgesehen, wobei die Umlenkrollen 7 die Antriebsrollen für die Ballenformeinrichtung 2 sind. Zusätzlich sind in dem gezeigten Ausführungsbeispiel ortsfest abgestützt weitere Umlenkrollen 12 vorgesehen, die auf einem Absatz 12.1 der Seitenwandgehäuseteile 12.2 angeordnet sind (Figur 3 und 4).

In diesem Bereich erweitert sich mithin das Gehäuse, so dass oberhalb der Führungsrollen 12 und der Endbereiche der Querstäbe 2.2 und der Riemen 2.1 für die Ballenformeinrichtung 2 ein Leerraum vorgesehen ist, in den die Ballenformeinrichtung 2 - in der Darstellung nach Figur 4 mithin nach oben - ausweichen kann.

Die Ballenformeinrichtung 2 hat des weiteren einen allgemein als Speicher 14 bezifferten Bereich, der über eine Umlenkrolle 18 an einem Spannarm 19 abgestützt ist. An diesem Spannarm 19 greift ein Feder 13 ausgebildeter Kraftspeicher an. Mithin kann die Ballenformeinrichtung 2 in diesem Bereich ausweichen. Füllt sich die Wickelkammer 3, so wird ein nach außen gerichteter Druck auf den Lasttrum 8 ausgeübt und die Feder 13 gestaucht. Dabei ändert sich die zwischen den Umlenkrollen 18 und 21 befindliche Länge der Ballenformeinrichtung 2. Die Erntegutballenvergrößerung geht einher mit einer Vergrößerung der Wickelkammer 3. Dadurch ist auch sichergestellt, dass in einer solchen Ballenformphase, die sich an die erste Ballenformphase mit räumlich bestimmter Bewegungsbahn der Ballenformeinrichtung anschließt, keine wesentliche Presskraft bzw. Verdichtungskraft von außen nach innen auf den zu formenden und sich vergrößernden Ballen vor der vorgesehenen Verdichtungsphase ausgeübt wird.

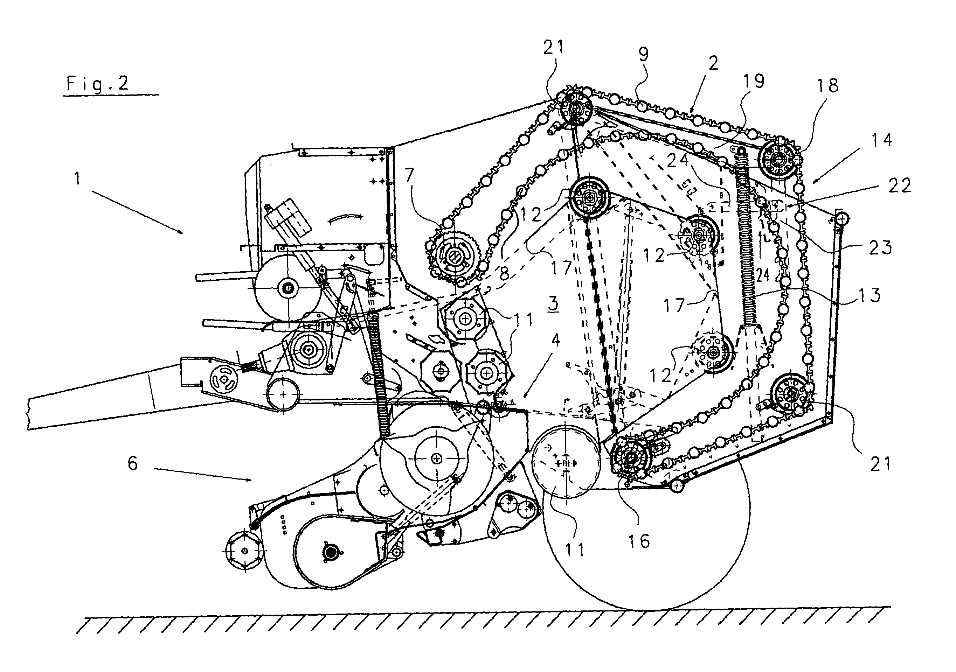

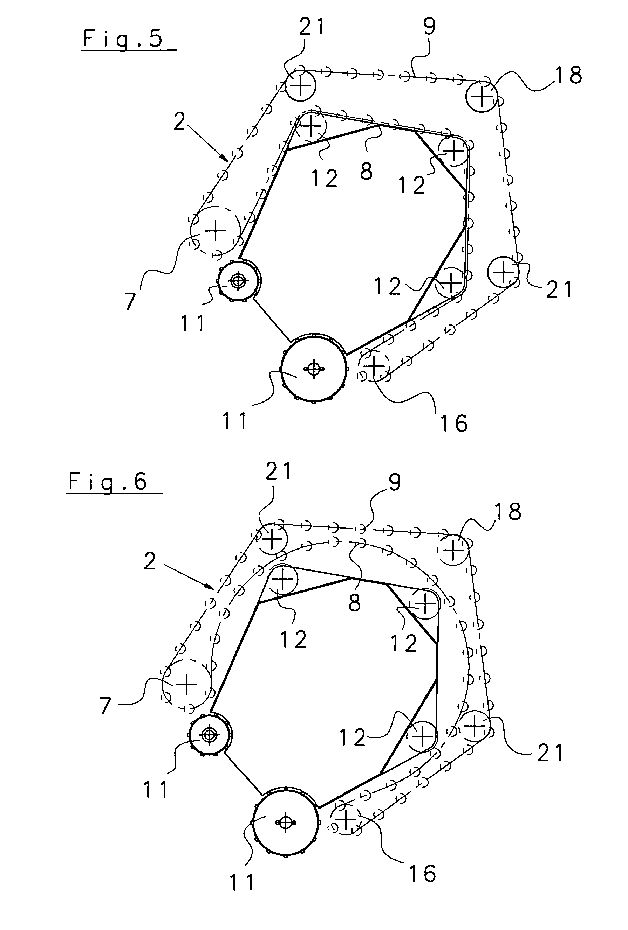

Im Betrieb wird über die Erntegutaufnahmevorrichtung 6 Erntegut in die Wickelkammer 3 durch die Einlassöffnung 4 eingebracht. Zu Beginn dieses Ballenformvorganges ist dabei eine Ballenstartkammer ausgebildet, die durch die Ballenformeinrichtung 2 mehreckig mit einem schräg nach oben zulaufendem Bereich, einen im wesentlichen senkrechten Bereich und einen sich daran wiederum anschließenden schräg nach oben verlaufenden Bereich der Ballenformeinrichtung 2 begrenzt wird, wie dies auch näher aus Figur 5 der Zeichnung hervorgeht. Dadurch ist der Ballenstartvorgang begünstigt. Während dieses Startvorganges und auch während einer definierten ersten Ballenformphase nimmt die Ballenformeinrichtung 2 die in Figur 5 dargestellte Lage ein und beschreibt mithin die daraus ersichtliche gleichbleibende und mithin räumlich bestimmte Bewegungsbahn. Dabei ist sie über die erste und zweite Umlenkrolle 7 bzw. 16 und dem, dem zu formenden Ballen zugewandten Bereich über die ortsfesten an dem Absatz der Seitenwandung 12.2 angeordneten ortsfesten Rollen 12 geführt. Füllt das eingebrachte Erntegut diese anfängliche Wickelkammer, kann sich die Ballenformeinrichtung 2 mit ihrem Lastrum 8 weiterhin ausdehnen, wobei über die Stauchung der Feder 13 und die nachgiebig angelenkte Umlenkrolle 18 sich die Bewegungsbahn der Ballenformeinrichtung 2 der sich jetzt erweiternden Größe in dieser nachfolgenden Ballenformphase anpasst, so dass während dieser nachfolgenden Ballenformphase in von den Führungsrollen unabhängige, durch den Durchmesser des zu formenden Ballens bestimmte weitere Bewegungsbahnen bis hin zu einem einstellbaren Ballendurchmesser ergeben. Die mit in dem dargestellten Ausführungsbeispiel erreichbare äußerste Bewegungsbahn ist in der Figur 2 und in der Figur 6 veranschaulicht.

Der zu formende Ballen kann mithin einen Durchmesser haben, der zwischen den Lagen einstellbar variieren kann, die durch die Lagen des Lastrums 8 der Ballenformeinrichtung 2 - gezeigt in Figur 2 - beliebig variieren kann. Aufgrund der nachgiebigen Abstützung der Umlenkrolle 18 ist während der weiteren Ballenformphase ein guter Kontakt zwischen der Ballenformeinrichtung 2 und dem Erntegut vorhanden, gleichfalls wird jedoch ein wesentlicher Pressdruck vermieden. Somit bleibt das angestrebte Ziel erhalten, einen relativ lockeren Balleninnenbereich vorliegen zu haben.

Eine einstellbare Begrenzungsvorrichtung zur Vorgabe eines Durchmessers des Erntegutballens ist in dem gezeigten Ausführungsbeispiel als relativ zum Spannarm 19 bewegbarer Anschlag 22 ausgebildet, der in ein gehäusefestes Widerlager 24 eingreift. Je nach Relativposition des Anschlags 22 zum Spannarm 19, d.h. je nach Winkel, der zwischen der Längsachse des Spannarms 19 und der Längsachse des Anschlags 22 eingestellt ist, greift eine der Aufnahmen des Anschlags 22 in das Widerlager 24 ein und begrenzt somit die wirksame Länge der Ballenformeinrichtung 2, die von dem Speicher 14 zur Vergrößerung der Wickelkammer 3 zur Verfügung gestellt wird. Auf diese Art und Weise ist eine sehr einfache Vorrichtung zur Vorgabe eines Durchmessers des Erntegutballens geschaffen. Zusätzlich kann auch noch eine Messvorrichtung angeordnet sein, um beispielsweise das Verdichtungsmaß des Ballens bzw. die aufgebrachte Presskraft zu kontrollieren.

Vorteilhafterweise ist die zum Speicher 14 gehörende Umlenkrolle 18 in Fahrtrichtung vor dem hinteren Ende der Maschine und hinter dem Zentrum des sich bildenden Erntegutballens angeordnet. Damit baut die Maschine kompakt. Die Kraftbeaufschlagung des Spannarms 19 durch den als Feder 13 ausgeführten Kraftspeicher ist somit etwa rechtwinklig zum Spannarm 19, was einen günstigen Hebelarm und mithin eine gute Übertragung der aufgebrachten Kräfte mit sich bringt. Weiterhin greift die Feder 13 in der Nähe der Umlenkrolle 18 an dem Spannarm 19 an, und damit in einem Bereich, in dem die von der Ballenformeinrichtung 2 auf den Spannarm 19 aufgebrachten Kräfte anliegen. Gleiches gilt auch für den Anschlag 22, der um die Drehachse 24 der Umlenkrolle 18 schwenkbar ist. Die von der Ballenformeinrichtung 2 auf die Umlenkrolle 18 übertragenen Kräfte werden über den Anschlag 22 und das Widerlager 24 sowie den Spannarm 19 direkt in das Gehäuse geleitet, was eine besonders feste Abstützung gewährleistet. Somit liegt eine Druckkraft an, durch die zusätzliche Biegemomente im Spannarm 19 vermeidbar sind. Es ist damit als eine Voraussetzung geschaffen, wesentliche Teile der Maschine 1 gewichts- und materialsparend auszulegen.

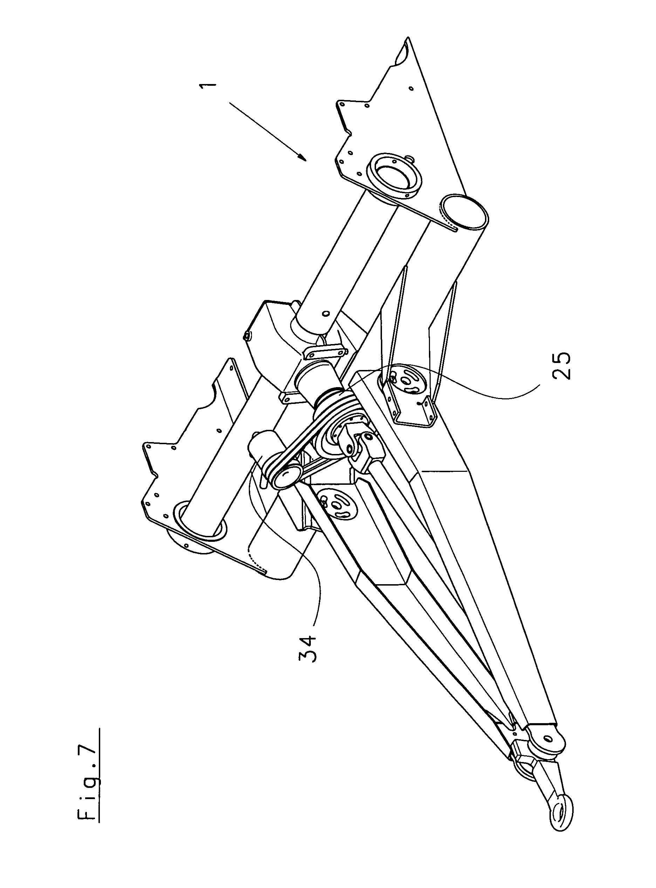

In Figur 7 ist eine Ausführungsform dargestellt, bei der es in einer alternativen Antriebslösung möglich ist, eine mit einer bordeigenen Hydraulikpumpe 34 versehene Maschine 1 zum Aufnehmen und Pressen von landwirtschaftlichem Erntegut im Falle einer Überlast im Antrieb betriebsbereit zu halten. Durch eine auf einem Außengehäuse einer Überlastsicherung 25 angebrachten und im Überlastfall weiterrotierenden Antriebsriemenscheibe wird die Hydraulikpumpe 34 auch im Überlastfall weiterhin mit mechanischer Antriebsenergie versorgt.

## Patentansprüche

1. Maschine (1) zum Aufnehmen und Pressen von landwirtschaftlichem Erntegut wie beispielsweise Heu, Stroh, Gras oder dergleichen zu rollenförmigen Ballen mit einer auf einem Fahrgestell abgestützten, aufklappbaren Wickelkammer (3), welche eine einer Erntegutaufnahmevorrichtung (6) nachgeordnete Ballenformeinrichtung (2) aufweist, welche über zumindest eine erste und eine zweite ortsfeste Umlenkeinrichtung (7,16) geführt ist und die während einer Ballenformphase innerhalb der Wickelkammer (3) eine räumlich bestimmte Bewegungsbahn auf Führungen (12) durchläuft und die zur Verdichtung des zu formenden Ballens nach Erreichen eines Ballendurchmessers auf den Ballen eine Verdichtungskraft von außen nach innen ausübt, **dadurch gekennzeichnet, dass** die Ballenformeinrichtung (2) während ihrer räumlich bestimmten Bewegungsbahn während einer ersten Ballenformphase auf zwischen der ersten und der zweiten Umlenkeinrichtung (7,16) gelegenen ortsfesten Führungen (12) abgestützt ist, von denen die Ballenformeinrichtung (2) während einer anschließenden Ballenformphase abhebbar ist.

2. Maschine nach Anspruch 1, **dadurch gekennzeichnet, dass** die Ballenformeinrichtung (2) während der anschließenden Ballenformphase in Abhängigkeit des Durchmessers des zu formenden Ballens von den ortsfesten Führungen (12) abhebbar ist.

3. Maschine nach Anspruch 2, **dadurch gekennzeichnet, dass** die zwischen der ersten und der zweiten Umlenkeinrichtung (7,16) vorgesehenen Führungen als ortsfeste Seitenwandführungen (12.1) ausgebildet sind.

4. Maschine nach einem der Ansprüche 1 bis 3, **dadurch gekennzeichnet, dass** Gehäusewandteile (12.3) den zu formenden Ballen während einer ersten Ballenformphase seitlich und während einer sich anschließenden Ballenformphase den zu formenden Ballen zusätzlich bereichsweise mit einem seitlichen Abstand begrenzen.

5. Maschine nach einem der Ansprüche 1 bis 4, **dadurch gekennzeichnet, dass** die seitlichen Gehäusewandungen (12.2) des Wickelraumes (3) mit einem nach innen ausgestellten Absatz als ortsfeste Seitenwandführungen (12.1) für die räumlich bestimmte Bewegungsbahn der Ballenformeinrichtung (2) ausgebildet sind.

6. Maschine nach Anspruch 5, **dadurch gekennzeichnet, dass** an dem Absatz der ortsfesten Seitenwandführungen (12.1) ortsfest abgestützte Umlenkrollen (12) vorgesehen sind.

7. Maschine nach einem der Ansprüche 1 bis 6, **dadurch gekennzeichnet, dass** die Ballenformeinrichtung (2) aus der räumlich bestimmten Bewegungsbahn während einer ersten Ballenformphase in einer nachfolgenden Ballenformphase in von den Führungen (12) unabhängige, durch den Durchmesser des zu formenden Ballens bestimmte weitere Bewegungsbahnen bis hin zu einem einstellbaren Ballendurchmesser überführbar ist, wobei der einstellbare Ballendurchmesser durch bewegliche Stellmittel (22, 26, 23) wählbar ist und nach Erreichen des gewählten Ballendurchmessers die Verdichtung des zu formenden Ballens von außen nach innen als Ballenverdichtungsphase einleitbar ist.

8. Maschine nach einem der Ansprüche 1 bis 7, **dadurch gekennzeichnet, dass** die Stellmittel (22) zur einstellbaren Begrenzung des Ballendurchmessers als mit zumindest einem Begrenzungselement (23) zusammenwirkende Anschläge ausgebildet sind.

9. Maschine nach einem der Ansprüche 1 bis 8, **dadurch gekennzeichnet, dass** das Begrenzungselement (23) an dem Maschinengehäuse angeordnet ist.

10. Maschine nach einem der Ansprüche 1 bis 9, **dadurch gekennzeichnet, dass** die Stellmittel (22) schwenkbar ausgebildet sind.

11. Maschine nach einem der Ansprüche 1 bis 10, **dadurch gekennzeichnet, dass** die Ballenformeinrichtung (2) endseitig an Riemen (2.1) festgelegte Querstäbe (2.2) aufweist.

12. Maschine nach einem der Ansprüche 1 bis 11, **dadurch gekennzeichnet, dass** die erste und die zweite Umlenkeinrichtung (7, 16) als in dem Ballenformraum angeordnete obere und untere ortsfeste Umlenkrollen ausgebildet sind, und die untere ortsfeste Umlenkrolle (16) unmittelbar einem Förderelement (11) der Erntegutaufnahmevorrichtung (6) nachgeordnet ist.

13. Maschine nach Anspruch 12, **dadurch gekennzeichnet, dass** das Förderelement (11) der unteren Umlenkrolle (16) derart vorgeordnet ist, dass das geförderte Erntegut von oben der auf der unteren Umlenkrolle (16) umgelenkten Ballenformeinrichtung (2) zugeführt wird.

14. Maschine nach einem der Ansprüche 1 bis 13, **dadurch gekennzeichnet, dass** die räumlich bestimmte Bewegungsbahn während einer ersten Ballenformphase derart an den Führungen (12) und den ortsfesten Seitenwandführungen (12.1) geführt ist, dass eine mehreckige, aber einer kreisrunden Form angenäherte Ballenstartkammer ausgebildet ist.

15. Maschine nach Anspruch 14, **dadurch gekennzeichnet, dass** die Ballenstartkammer dreieckförmig, viereckförmig oder fünfeckförmig ausgebildet ist.

16. Maschine nach einem der Ansprüche 1 bis 15, **dadurch gekennzeichnet, dass** die Umlenkeinrichtungen (12) außerhalb der den Wickelraum (3) während der ersten Ballenformphase seitlich begrenzenden Gehäusewandung (12.3) angeordnet sind.

17. Maschine nach einem der Ansprüche 1 bis 16, **dadurch gekennzeichnet, dass** sich die Querstäbe (2.2) der Ballenformeinrichtung (2) über die Breite des Ballenformraumes während der ersten Ballenformphase hinaus erstrecken.

18. Maschine nach einem der Ansprüche 1 bis 17, **dadurch gekennzeichnet, dass** mit Einleitung der Ballenverdichtungsphase Messelemente zur Bestimmung einer Ballenkenngröße, wie z. B. der Ballenfestigkeit oder dergleichen aktivierbar sind.

19. Maschine nach einem der Ansprüche 1 bis 18, **dadurch gekennzeichnet, dass** eine von einer Überlastsicherung (25) unabhängige Hydraulikpumpe (28) vorgesehen ist, die im Überlastfall für eine Öffnung der Wickelkammer ausgebildet ist.

20. Maschine nach einem der Ansprüche 1 bis 19, **dadurch gekennzeichnet, dass** die Ballenformeinrichtung (2) über eine Umlenkrolle (18), die von einem Kraftspeicher belastbar ist, nachgiebig abstützbar ist.
